**Europäisches Patentamt**

**European Patent Office**

**Office européen des brevets**

(11) Veröffentlichungsnummer: **0 422 387 A2**

# (12) EUROPÄISCHE PATENTANMELDUNG

(21) Anmeldenummer: **90117076.1**

(22) Anmeldetag: **05.09.90**

(51) Int. Cl.[5]: **B67C 11/04, B01D 29/085**

(30) Priorität: **05.09.89 DE 8910559 U**

(43) Veröffentlichungstag der Anmeldung:
**17.04.91 Patentblatt 91/16**

(84) Benannte Vertragsstaaten:
**AT BE CH DE DK ES FR GB IT LI LU NL SE**

(71) Anmelder: **FIRMA ALFRED KUEHMICHEL**
**Hasselbacher Weg 13**
**W-6295 Allendorf-Weilburg(DE)**

(72) Erfinder: **Kuehmichel, Manfred**
**Hasselbacherweg 13**
**W-6295 Allendorf-Weilburg(DE)**

(74) Vertreter: **Blumbach Weser Bergen Kramer**
**Zwirner Hoffmann Patentanwälte**
**Sonnenberger Strasse 100**
**W-6200 Wiesbaden 1(DE)**

(54) **Einfülltrichter.**

(57) Einfülltrichter mit einwärts gebogenem Rand (134) und mit einer Verschließeinrichtung (140) am Auslauf (132). Der Einfülltrichter ist vorzugsweise als Kunststoffhohlteil geblasen oder gespritzt und kann mit einem Verlängerungsstück zusammenarbeiten, das ins Innere eines zu befüllenden Behälters hineinragt.

FIG.1

EP 0 422 387 A2

## EINFÜLLTRICHTER

Die Erfindung bezieht sich auf einen Einfülltrichter zum Einfüllen von gefährlichen Flüssigkeiten in Behälter, mit einer Einfüllschale, mit einem darin angebrachten Sieb und mit einem exzentrisch zur Achse der Einfüllschale angeordneten Auslauf.

Ein derartiger Einfülltrichter ist aus der EP 0 318 633 A2 des Anmelders bekannt und dient zum Einfüllen von Abfallflüssigkeiten, insbesondere Altölen und Chemikalien, in einen faßartigen Entsorgungsbehälter. Die Schale kann zum bequemeren Einfüllen über den Rand des Fasses geschwenkt werden. Beim heftigen Einfüllen kann Abfallflüssigkeit aus der Einfüllschale herauschwappen, und wenn diese über den Rand des Fasses geschwenkt ist, besteht die Gefahr des Verschüttens.

Im Falle der Handhabung von Altöl können sich Dämpfe entwickeln, die in einem bestimmten Mischungsverhältnis zu Luft explosionsgefährdet sind. Solche Dampf-Luft-Gemische können sich vor allem in halbleeren Entsorgungsbehältern entwickeln, zumal zu entsorgendes Altöl gewöhnlich in kleineren Portionen anfällt, so daß der Behälter nicht zügig gefüllt wird.

Wenn ein Entsorgungsbehälter in einfacher und darum wirtschaftlicher Art mit Abfallflüssigkeit befüllt wird, kann es mangels eines Füllstandsanzeigers vorkommen, daß die Flüssigkeit bis in den Einfülltrichter ansteigt. Beim Entfernen des Einfülltrichters würde die überschüssige Flüssigkeit austreten.

Der Erfindung liegt die Aufgabe zugrunde, einen Einfülltrichter der eingangs angegebenen Art so zu gestalten, daß mit ihm ein gefahrloses Füllen von Behältern mit Flüssigkeit möglich wird.

Die gestellte Aufgabe wird aufgrund der in den Ansprüchen angegebenen Maßnahmen gelöst.

Indem der obere Rand der Einfüllschale nach einwärts gebogen ist, wird beim Einfüllen schwappende Flüssigkeit in das Schaleninnere zurückgelenkt und so das Verschütten von Flüssigkeit vermieden.

Im Falle von einfachen Behältern ohne Füllstandsanzeige wird ein Einfülltrichter mit im Auslauf angeordneter Verschließeinrichtung benutzt. Mit der Verschließeinrichtung kann der Auslauf gesperrt werden und somit überschüssige Flüssigkeit mit dem Einfülltrichter als Gefäß gefahrlos weggeschafft werden.

Der Einfülltrichter kann auch als Entlüftungseinrichtung für den zu befüllenden Behälter gestaltet sein.

Schließlich kann der Einfülltrichter auch als Explosionsschutzvorrichtung gestaltet sein.

Weitere Einzelheiten der Erfindung werden anhand der verschiedenen Ausführungsformen erläutert. In der Zeichnung zeigt:

Fig. 1  einen Schnitt durch das obere Ende einer Einfüllvorrichtung, teilweise abgebrochen,

Fig. 2  eine Ansicht von oben auf einen Schraubkopf,

Fig. 3  eine mögliche Ausführungsform des unteren Endes der Einfüllvorrichtung,

Fig. 4  einen Entsorgungsbehälter mit angesetzter Einfüllvorrichtung und Entlüftungsvorrichtung,

Fig. 5  einen axialen Längsschnitt durch einen Einfülltrichter mit Verschließeinrichtung,

Fig. 6  eine Ansicht von oben auf den Einfülltrichter,

Fig. 7  eine zweite Ausführungsform der Verschließeinrichtung,

Fig. 8  eine dritte Ausführungsform der Verschließeinrichtung und

Fig. 9  eine Variante hiervon.

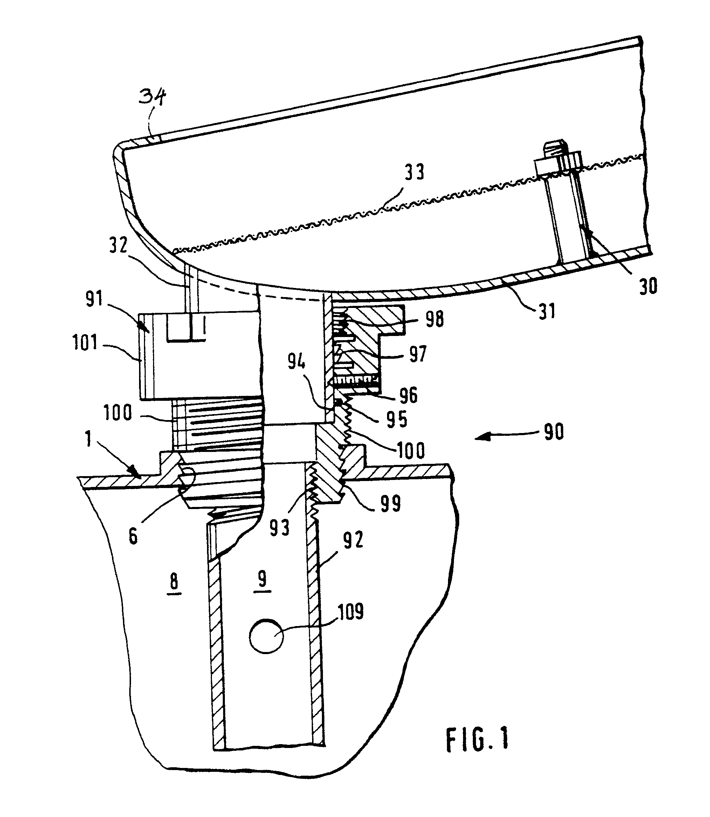

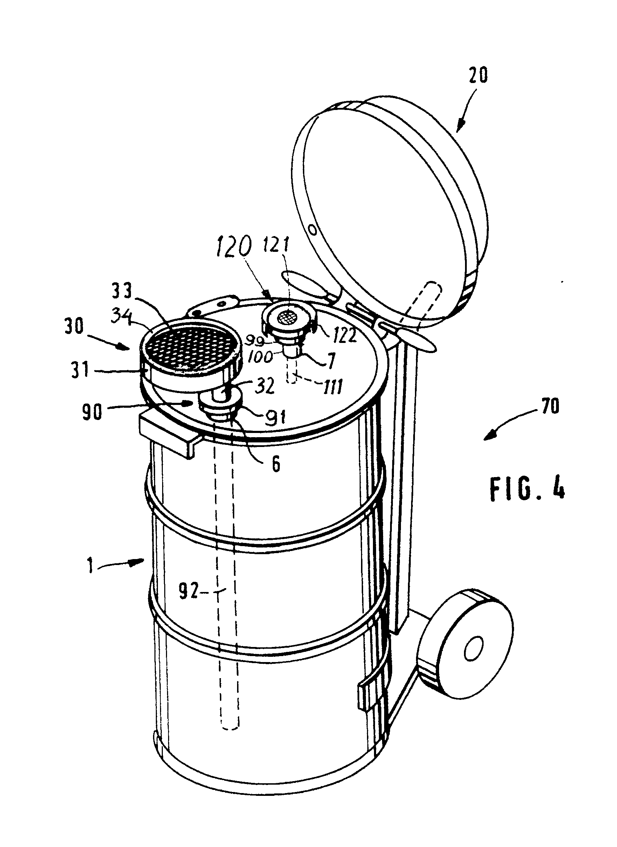

Es wird Bezug auf Fig. 1 bis 4 genommen. Die Fig. 4 zeigt einen Entsorgungsbehälter gemäß EP-A-318 633, komplettiert mit einer Einfüllvorrichtung 30/90 und einer Entlüftungseinrichtung 120. Der Entsorgungsbehälter besteht im wesentlichen aus einem genormten, handelsüblichen Faß 1, einem am oberen Faßrand schwenkbar angelenkten, gewölbten Deckel 20 und einer Rollvorrichtung 70.

Die Einfüllvorrichtung umfaßt einen Einfülltrichter 30 und ein Einfüll-Schraubrohr 90. Der Einfülltrichter 30 besteht aus einer ellipsoidförmig gewölbten Einfüllschale 31, einem Auslaufstutzen 32 und einem metallischen Siebeinsatz 33. Der obere Rand der Einfüllschale 30 ist nach einwärts oder innen gebogen, wie bei 34 in Fig. 1 dargestellt. Der Auslauf 32 des Einfülltrichters 30 und das Einfüllschraubrohr 90 bilden zusammen einen axialen Kanal 9 (Fig. 1), durch den Flüssigkeiten in das Faß 1 und Luft aus dem Faß 1 geleitet werden können. Der metallische Siebeinsatz 33 ist derart ausgewählt, daß keine Flamme hindurchschlagen kann.

Das Einfüllschraubrohr 90 enthält einen Schraubkopf 91 und ein Tauchrohr 92, die fest oder lösbar miteinander verbunden sind. Der Schraubkopf 91 hat insgesamt die Gestalt eines Ringes 101 mit unterschiedlichen und abgestuften Innen- und Außendurchmessern sowie mit Griff-Fortsetzungen 102 am oberen Ende. Die engste ringförmige Innenoberfläche 93 ist dem Außendurchmesser des Tauchrohres 92 angepaßt und beispielsweise mit einem Feingewinde versehen, das zum Feingewinde 110 des Tauchrohres 92 paßt, um dieses zu befestigen. Die nächstgrößere ringförmige Innenoberfläche 94 ist dem Außendurchmesser des Auslaufstutzens 32 angepaßt, so daß dieser durch Einstecken aufgenommen werden kann. Diese Steckverbindung ist durch eine Ringdichtung 95 abgedichtet, die sich in einer Nut im Schraubkopf 91 im Bereich der Innenoberfläche 94 befindet. Außerdem kann noch eine Querschraubbohrung 96 für eine nicht gezeigte Flügelschraube vorgesehen sein, um den Auslaufstutzen 32 klemmend zu fixieren. Auf der Innenseite des Schraubkopfes 91 sind ferner ein Sägegewinde 97 und ein Feingewinde 98 vorgesehen, deren Durchmesser und Ausbildung an die genormten Schraubdeckel von Chemiefässern bzw. Ölfässern angepaßt sind.

Auf der Außenseite weist der Schraubkopf 91 wiederum ein Sägegewinde 99 entsprechend dem Sägegewinde 97 und ein Feingewinde 100 entsprechend dem Feingewinde 98 auf. Aufgrund des Sägegewindes 99 und des Feingewindes 100 kann der Schraubkopf 91 in die Einfüllöffnung 6 von Fässern 1 sowohl für Chemikalien als auch für Öl eingeschraubt werden, welche Faßtypen unterschiedliche Verschraubungen an ihren Einfüllöffnungen haben. Es ist natürlich auch möglich, einen Schraubkopf nur für Ölfässer oder nur für Chemiefässer zu gestalten, wobei man mit einer geringeren Bauhöhe, als in Fig. 1 dargestellt, auskommt.

Wie Fig. 4 zeigt, kann das Tauchrohr 92 als einfaches Rohrstück passender Länge ausgebildet sein, wobei sich die Länge nach der Höhe des zu bedienenden Fasses 1 richtet. Das Tauchrohr 92 soll nämlich knapp oberhalb der unteren Bodenwand des Fasses 1 enden, damit dieses untere Ende des Tauchrohres 92 schon kurz nach Beginn eines Einfüllvorganges unterhalb des Flüssigkeitsspiegels zu liegen kommt, also in diesen Flüssigkeitsspiegel eintaucht. Die eingefüllte Flüssigkeit wird dadurch weniger stark aufgewirbelt, wenn von Zeit zu Zeit weitere Flüssigkeit nachgefüllt wird, wie dies bei der beabsichtigten Verwendung des Fasses die Regel sein wird. Dadurch werden weniger Dämpfe gebildet, und Feststoffe in der eingefüllten Flüssigkeit können sich absetzen, was gegebenenfalls deren Abtrennung ermöglicht.

Das Tauchrohr 92 weist in der Nähe seines oberen Endes eine Querbohrung 109 auf, durch die aus dem Faßinneren verdrängte Luft in den axialen Kanal 9 und durch das Sieb 33 in die Außenluft gelangen kann.

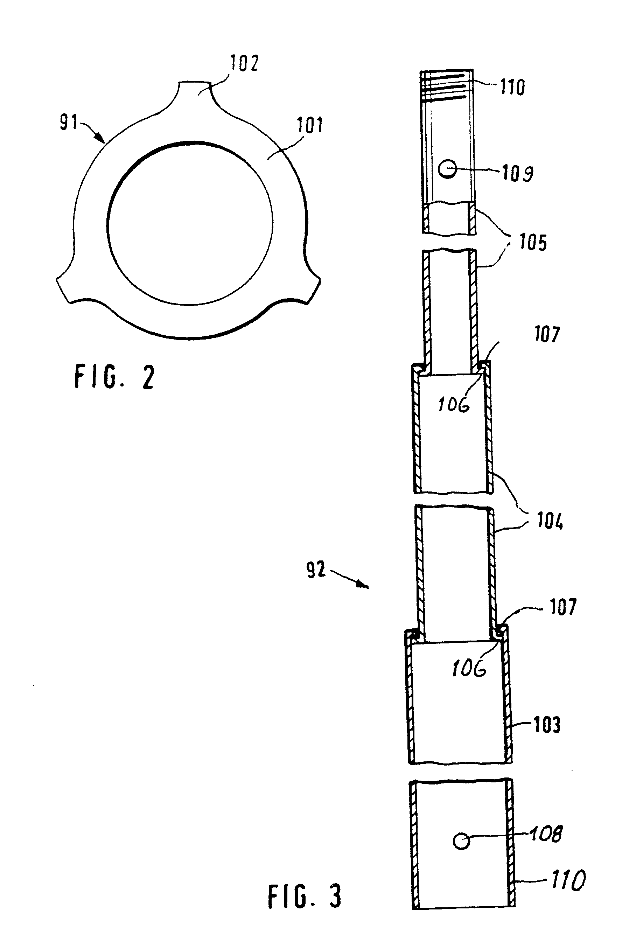

Das Tauchrohr 92 kann auch aus einzelnen Rohrabschnitten 103, 104, 105 aufgebaut sein (Fig. 3), die mit sukzessive größeren Durchmessern gestaltet sind und an ihren Enden jeweils nach außen bzw. innen gebördelte Flansche 106 bzw. 107 aufweisen, um teleskopierend ineinandergesteckt zu werden und gleichzeitig eine Auszugsbegrenzung darzustellen. Nahe des unteren Endes des Tauchrohrs 92 kann eine Querbohrung 108 vorgesehen sein, die in jedem Fall einen Auslauf für eingefüllte Flüssigkeit darstellt, falls das untere Ende 110 auf dem Faßboden aufstehen sollte. Die in Fig. 3 dargestellte Ausführungsform des Tauchrohres 92 eignet sich für unterschiedliche Größen von Fässern.

Wenn die Einfüllvorrichtung 90 in die Einfüllöffnung 6 eines Fasses 1 eingeschraubt und der Einfülltrichter 30 eingesteckt sind, stellt dies einen gewissen Explosionsschutz dar, weil nämlich das Sieb 33 eine Flammensperre zwischen dem Äußeren und dem Inneren des Fasses 1 darstellt. Auch der Umstand, daß das Tauchrohr 92 normalerweise in den Spiegel der Flüssigkeit eintaucht, bringt es mit sich, daß der größere, gegebenenfalls mit brennbarem Flüssigkeitsdampf gefüllte obere Faßraum 8 vom Kanal 9 innerhalb der Vorrichtung 90 getrennt ist.

Wenn das Faß 1 eine gesonderte Belüftungsöffnung 7 aufweist, kann der Explosionsschutz durch eine Entlüftungsvorrichtung 120 vervollständigt werden, die eine gewisse Ähnlichkeit mit dem Schraubkopf 91 aufweist, indem sie an ihrer Außenseite Sägegewinde 99 und Feingewinde 100 passend für die Einfüllöffnung 6 von Fässern sowohl für Chemikalien als auch für Öl aufweist. Außerdem ist noch ein Fortsatz 111 mit 3/4 Zoll-Außengewinde für die Belüftungsöffnung 7 gewisser Faßtypen vorgesehen. Das Innere der Entlüftungsvorrichtung bietet Raum für einen (nicht gezeigten) Aktivkohlefilter, um aus dem Faßinneren 8 austretende Dämpfe zu absorbieren. Unterhalb und oberhalb des Kohlefilters ist je ein metallisches Maschendrahtnetz 121 angebracht, welche je eine Flammensperre darstellen. Am oberen Ende ist noch ein pilzförmiger Lüftungsdeckel 122 aufgeschraubt, der den Austritt von gefilterter Luft ermöglicht, aber gegen eintretendes Spritzwasser schützt.

Wenn man den Einfülltrichter 30 von dem Einfüllschraubrohr 90 abzieht, kann die Einfüllvorrichtung dadurch geschlossen werden, daß man den gewöhnlichen Deckel des Fasses 1 auf das Gewinde 97 oder 98 schraubt, was von der Art des verwendeten Fasses abhängt.

Wenn das Faß gefüllt ist, wird die Einfüllvorrichtung mit den Teilen 30 und 90 entfernt und der gewöhnliche Faßdeckel auf die Öffnung 6 aufgeschraubt. Das gleiche gilt hinsichtlich der gesonderten Entlüftungsvorrichtung für die Belüftungsöffnung 7, die nach Herausschrauben der Entlüftungsvorrichtung mit dem gewöhnlich vorhandenen Deckel verschlossen wird.

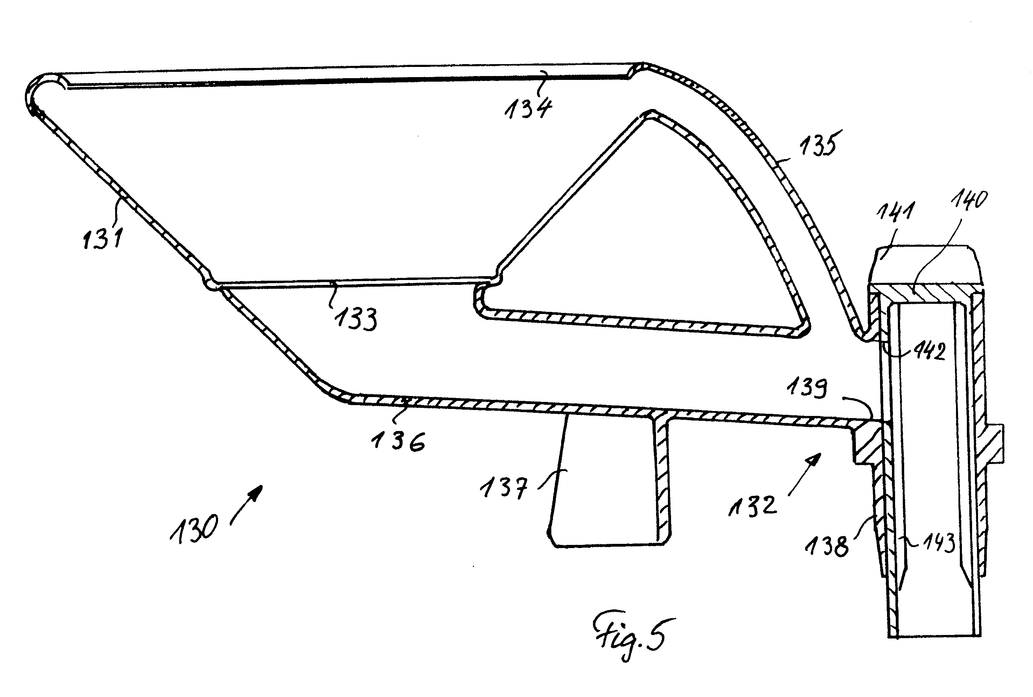

Die Fig. 5 bis 9 zeigen Ausführungsformen mit verschließbarem Einfülltrichter 130. Im einzelnen sind eine sich nach unten verjüngende Einfüllschale 131, ein rohrförmiger Auslauf 132, ein Sieb 133 und ein Griff 135 vorgesehen. Der obere Rand 134 der Einfüllschale 131 ist nach einwärts oder innen gebogen, um hochschwappende Flüssigkeit wieder ins Innere des Trichters zu leiten. Der Auslauf 132 umfaßt einen schwach geneigten Rohrabschnitt 136, der mit einem Stützfuß 137 versehen ist, und einen Auslaufstutzen 138, der über eine Öffnung 139 mit dem Rohrinneren 136 verbunden ist, sich senkrecht erstreckt und zur Aufnahme eines Drehhahnes 140 dient. Der Hahn 140 besteht aus einem rohrförmigen, einseitig geschlossenen Hohlkörper mit Griff 141, seitlicher Öffnung 142 und gegebenenfalls Verstärkungsrippen 143. Die Öffnung 142 fluchtet zur Öffnung 139, wenn der Hahn geöffnet ist, und kann mittels des Griffes 141 weggeschwenkt werden, so daß der Rohrabschnitt 136 abgesperrt wird. Das Innere des Hahns 140 und die Öffnungen 139, 142 sind genügend weit, so daß aus dem Inneren des Behälters verdrängte Luft durch den hohlen Griff 135 und über das obere Ende der Einfüllschale 131 nach außen gelangen kann.

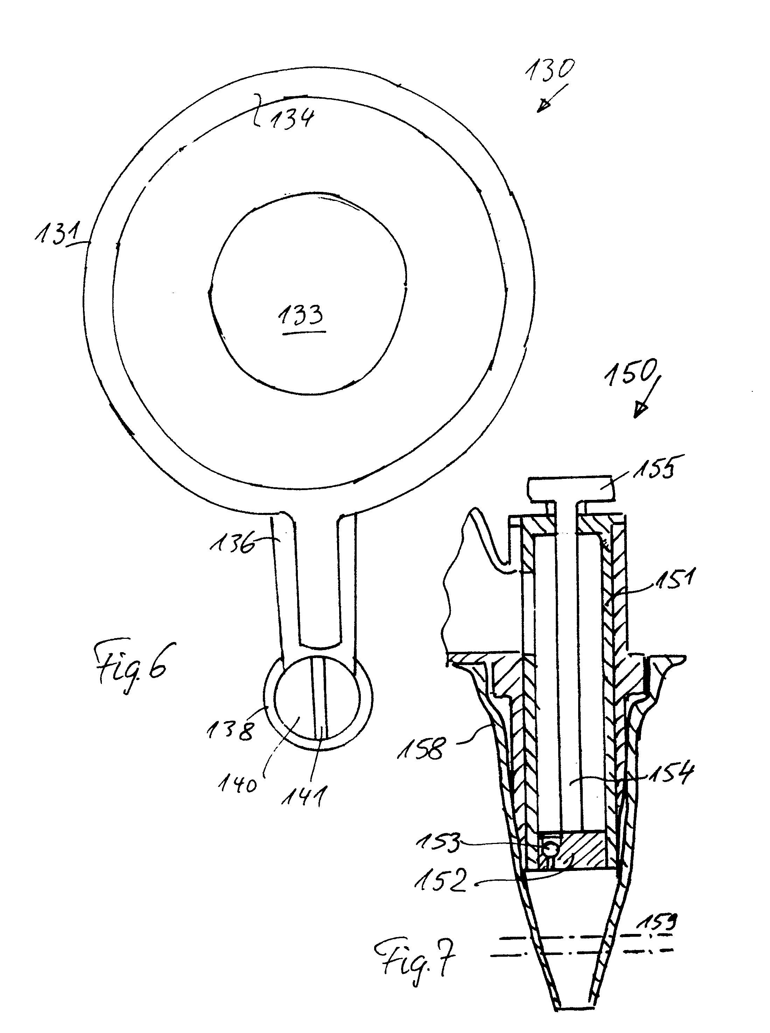

Der Einfülltrichter 130 kann aus Kunststoff geblasen oder spritzgegossen sein. Die Einfüllschale 131 kann, von oben gesehen (Fig. 6), kreisförmig sein, es sind aber auch andere Gestaltungen, z. B. eine elliptisch abgeplattete Ausführungsform möglich, wenn eine solche aus Raumgründen gewünscht wird.

Zum Befüllen eines Behälters, beispielsweise des in Fig. 4 dargestellten Fasses 1, wird vorzugsweise das Einfüllschraubrohr 90 benutzt, in das der Auslaufstutzen 138 eingesteckt wird. Oberhalb der Querbohrung 109 bildet sich im oberen Teil 8 des Behälters 1 (Fig. 1) eine Lufttasche, die das vollständige Füllen des Behälters 1 verhindert. Wenn weitere Flüssigkeit eingefüllt sein sollte, die nicht mehr aus der Einfüllschale 131 abläuft, wird der Hahn 140 in seine Sperrstellung gedreht und das Einfüllschraubrohr 90 gelöst und angehoben. Dabei strömt Luft aus der Lufttasche ab, und die im Inneren des Schraubkopfes 91 befindliche Flüssigkeit gelangt in das Faßinnere. Es ist auch möglich, das Volumen der Wandteile 138, 140 größer als das von Flüssigkeit eingenommene Innere des Hahns 140 zu machen. Flüssigkeit, die sich im Inneren des Hahnes 140 befindet, gelangt beim Abziehen des Einfülltrichters in das Innere des Schraubkopfes 91, ohne daß dieser überläuft. (Auch das vom Einfüllschraubrohr 92 eingenommene Volumen ist größer als das Volumen des Inneren des Schraubrohres 91).

Fig. 7 zeigt die Verschlußeinrichtung 150 eines Einfülltrichters, der wie der Einfülltrichter 130 nach Fig. 5 und 6 gestaltet sein kann. In den Auslaufstutzen 138 ist ein Hohlkörper 151 eingesetzt, der als Führung für einen Schieberkolben 152 dient. Im Schieberkolben 152 ist ein Rückschlagventil 153 angeordnet. Das Rückschlagventil 153 kann eine oder mehrere Kugeln enthalten, die jeweils auf einem kegelförmigen Ventilsitz aufruhen und dort mit Schwerkraft oder Federkraft gehalten werden.

Es sind auch andere Konstruktionen möglich, beispielsweise mit Klappen. Das Rückschlagventil 153 ist so gepolt, daß eine Flüssigkeitsströmung nur von unten nach oben durch das Ventil gelangen kann.

Der Schieberkolben 152 ist mit einer Kolbenstange 154 verbunden, die durch eine Bohrung am oberen Ende des Hohlkörpers 151 geführt ist und auf deren oberen Ende ein Griff 155 befestigt ist. Zum Einfüllen von Flüssigkeit wird der Schieberkolben 152 nach oben in Anlage am oberen Ende des Hohlkörpers 151 gezogen, während zum Verschließen des Einfülltrichters der Schieberkolben nach unten wie dargestellt verschoben wird, wobei die verdrängte Flüssigkeit durch das Rückschlagventil 153 vom Bereich unterhalb des Schieberkolbens in den Bereich oberhalb des Schieberkolbens gelangen kann. Der Einfülltrichter 150 kann deshalb an seinem unteren Ende verschlossen werden.

In Fig. 7 ist noch ein sich verjüngendes Aufsteckrohr 158 aus Kunststoff dargestellt, welches in unterschiedlich weite Einsecköffnungen von Behältern paßt. Sofern man einen rascheren Durchlauf wünscht, kann das untere Ende in passender Höhe abgeschnitten werden, wie bei 159 angedeutet.

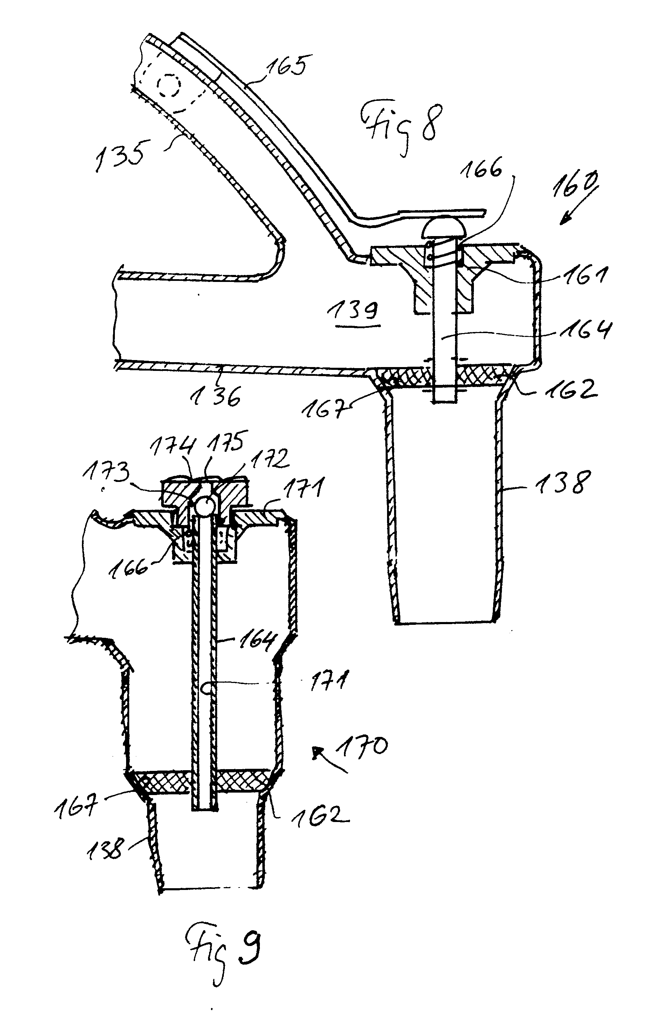

Fig. 8 zeigt eine weitere Ausführungsform einer Verschließeinrichtung 160. Die Verschließeinrichtung 160 weist einen deckelartigen Führungskörper 161, ein kegelstumpfartig ausgebildetes Ventilsitzelement 162, eine Ventilstange 164, einen Betätigungshebel 165 und eine Rückholfeder 166 auf. Der Auslaufstutzen 138 ist an seinem Übergang zum Rohrabschnitt 136 kegelförmig gestaltet, um einen Ventilsitz 167 zu bilden. Der Betätigungshebel 165 ist am Griff 135 angelenkt, so daß man den Hebel 165 nach unten schwenkt, wenn man den Griff faßt. Der nach unten geschwenkte Betätigungshebel 165 führt das Ventil in seine gezeigte Schließstellung. Beim Loslassen des Griffes hebt die Ventilfeder 166 das Ventilelement 162 an, bis es an der Unterseite des Führungskörpers 161 anliegt. Die Öffnung 139 ist genügend weit, einerseits Flüssigkeit nach unten strömen zu lassen und andererseits die entweichende Luft aus dem Behälter vorbeizulassen.

Fig. 9 zeigt eine weitere Verschließeinrichtung 170, welche die Ausführungsform 160 derart abwandelt, daß der Verschluß am unteren Ende des Auslaufstutzens 138 erfolgt. Demgemäß ist der Ventilsitz 167 weiter unten angeordnet. Die Ventilbetätigungsstange 164 ist länger und weist einen axialen Kanal 171 auf, auf dessen oberem Ende eine Kugel 172 aufruht, die in einem Raum 173 frei beweglich ist, der im Inneren einer Mutter 174 geschaffen ist. Die Mutter 174 weist einen Luftauslaßkanal 175 auf, der an seinem unteren Ende als Ventilsitz für die Kugel 172 gestaltet ist. Im übrigen ist die Mutter 174 als Widerlager für die Ventilfeder 166 und als Auflagestelle des unteren Endes des Betätigungshebels 165 gestaltet.

Die Einrichtung 171 bis 175 dient zur Abführung von Luft, sperrt aber austretende Flüssigkeit. Dies wird durch den Schwimmeffekt der Kugel 172 bewirkt, aber auch dadurch, daß Flüssigkeit eine wesentlich größere Viskosität als Luft hat und deshalb von der Flüssigkeit angehoben wird und gegen den Ventilsitz am Kanal 175 gedrückt wird.

Es ist natürlich auch möglich, statt des beschriebenen Ventils einfach einen Verlängerungsschlauch für den Kanal 171 vorzusehen, der oberhalb des möglichen Flüssigkeitsspiegels in der Schale 131 hinausragt.

In der Ausführungsform nach Fig. 1 bis 4 wird beim Befüllen die Bildung einer Lufttasche im oberen Bereich 8 des Fasses 1 ermöglicht. Wenn die Flüssigkeit bis in die Schale 31 steht, kann man durch Lockern des Einfüllschraubrohrs 90 diese Lufttasche entlüften, wonach die überschüssige Flüssigkeit aus der Schale noch in das Faß gelangen kann.

**Ansprüche**

1. Einfülltrichter zum Einfüllen von Flüssigkeiten in Behälter, mit einer Einfüllschale (31), mit einem darin angebrachten Sieb (33) und mit einem exzentrisch zur Achse der Einfüllschale angeordneten Auslauf (32),
dadurch gekennzeichnet,
daß der obere Rand (34) der Einfüllschale (31) nach einwärts gebogen ist.

2. Einfülltrichter nach Anspruch 1,
dadurch gekennzeichnet,
daß im Auslauf eine Verschließeinrichtung (140, 150, 160, 170) amgeordnet ist.

3. Einfülltrichter nach Anspruch 2,
dadurch gekennzeichnet,
daß die Verschließeinrichtung einen Drehschieber (140) enthält.

4. Einfülltrichter nach Anspruch 2,
dadurch gekennzeichnet,
daß die Verschließeinrichtung einen Schieberkolben (125) mit Rückschlagventil (153) enthält.

5. Einfülltrichter nach Anspruch 2,
dadurch gekennzeichnet,
daß die Verschließeinrichtung ein Sitzventil (162) enthält.

6. Einfülltrichter nach einem der Ansprüche 1 bis 5, dadurch gekennzeichnet,

daß die Einfüllschale (131) in einen schwach geneigten Rohrabschnitt (136) einmündet, der seinerseits in einen sich senkrecht erstreckenden Auslaufstutzen (138) einmündet und daß die Einmündungsstelle (139) über einen hohlen Griff (135) mit dem oberen Rand (134) der Einfüllschale verbunden ist.

7. Einfülltrichter nach Anspruch 6,
dadurch gekennzeichnet,
daß die Einfüllschale (131), das schwach geneigte Auslaufrohr (136), der Auslaufstutzen (138) und der hohle Griff (135) als einstückiges, hohles Kunststoffteil geblasen oder spritzgegossen ist.

8. Einfülltrichter nach einem der Ansprüche 1 bis 7, dadurch gekennzeichnet,
daß ein Verbindungsstück (91, 158) zwischen Auslauf (32, 132) und Behälteröffnung (6) vorgesehen ist und
daß die in das Verbindungsstück (91, 158) ragenden Wandteile des Einfülltrichters ein Volumen einnehmen, welches größer ist als das von diesen hineinragenden Wandteilen umschlossene Volumen, in welchem sich einzufüllende Flüssigkeit befinden kann.

9. Einfülltrichter nach Anspruch 8,
dadurch gekennzeichnet,
daß das Verbindungsstück als Schraubkopf [91] und Tauchrohr (92) gestaltet ist und
daß der Schraubkopf (91) einen axialen Durchlaß (94) und Verschraubungen (93, 97, 98, 99, 100) aufweist, von denen eine Außenverschraubung (99 oder 100) auf die Standardöffnung (6) von genormten Fässern (1) paßt, und
daß das Tauchrohr (92) mit dem axialen Durchlaß (94) verbindbar ist.

10. Einfülltrichter nach Anspruch 9,
dadurch gekennzeichnet,
daß das Tauchrohr (92) aus wenigstens zwei ineinander teleskopierbaren Rohrstücken (104, 105) besteht, von denen wenigstens das obere Rohrstück (105) eine Querbohrung (109) aufweist.

FIG.1

FIG. 2

FIG. 3

FIG. 4

Fig. 5

EP 0 422 387 A2

130

134

131

133

150

155

151

136

154

158

Fig. 6

138

153

140  141

152

159

Fig. 7

Fig 8

Fig 9